(19) Europäisches Patentamt
European Patent Office
Office européen des brevets

(11) **EP 4 009 600 A1**

(12) **EUROPEAN PATENT APPLICATION**
published in accordance with Art. 153(4) EPC

(43) Date of publication:
08.06.2022 Bulletin 2022/23

(51) International Patent Classification (IPC):
**H04L 27/26** (2006.01)

(21) Application number: 21827556.8

(22) Date of filing: 20.08.2021

(86) International application number:
PCT/CN2021/113896

(87) International publication number:
WO 2022/042453 (03.03.2022 Gazette 2022/09)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 24.08.2020 CN 202010859822

(71) Applicants:
• **Beijing Smartchip Microelectronics Company Limited**
**Beijing 100192 (CN)**
• **State Grid Information & Telecommunication Group Co., Ltd.**
**Beijing 102211 (CN)**

(72) Inventors:
• **LI, Dejian**
**Beijing 100192 (CN)**
• **WANG, Yubo**
**Beijing 100192 (CN)**
• **QIU, Sihai**
**Beijing 100192 (CN)**
• **XIAO, Deyong**
**Beijing 100192 (CN)**
• **WANG, Xianhui**
**Beijing 100192 (CN)**

(74) Representative: **Meyer, Thorsten**
**Meyer Patentanwaltskanzlei**
**Pfarrer-Schultes-Weg 14**
**89077 Ulm (DE)**

(54) **CHIRP SIGNAL-BASED MODULATION METHOD AND MODULATOR**

(57) The present disclosure relates to the field of communication technologies, and provides a chirp signal-based modulation method and modulator. The chirp signal-based modulation method includes: modulating M-ary data, and mapping modulated M-ary data onto M pieces of different phase data or M pieces of different frequency data, where $M = 2^L$, L is a positive integer, and the phase data or the frequency data is discrete phase data or frequency data of a chirp signal with a Doppler frequency shift; and generating and outputting, based on the M pieces of different phase data or the M pieces of different frequency data, M modulated signals corresponding to the M-ary data. The present disclosure realizes modulation and mapping of the M-ary data within one pulse width, thereby greatly improving transmission efficiency of communication data.

S101 — Modulate M-ary data, and map modulated M-ary data onto M pieces of different phase data or M pieces of different frequency data

S102 — Generate and output, based on the M pieces of different phase data or the M pieces of different frequency data, M modulated signals corresponding to the M-ary data

FIG. 1

EP 4 009 600 A1

**Description**

**TECHNICAL FIELD**

The present disclosure relates to the field of communication technologies, and in particular, to a chirp signal-based modulation method and modulator.

**BACKGROUND**

From the beginning of mobile communication in the 1990s to now, wireless communication technologies have developed rapidly, changing people's life greatly. Due to dependence of wireless communication on spectrums and a non-renewable characteristic of spectrum resources, with the wide application of a variety of wireless communication technologies, frequency bands are becoming more crowded, and communication interference is more serious. To obtain large-capacity, high-speed, high-security, and high-reliability wireless communication, an ultra wide band (UWB) spread spectrum communication technology becomes an efficient solution to this problem. The spread spectrum communication technology uses a signal correlation for communication. A transmitting end sends a signal modulated by a spread spectrum code, and a receiving end processes the received signal by a known spread spectrum code. Due to self-correlation of the spread spectrum code, spread spectrum communication has a strong anti-interference capability.
Using a chirp signal with a natural spread spectrum characteristic for wireless communication is an UWB spread spectrum communication technology. Similar to traditional spread spectrum technologies such as direct sequence spread spectrum (DSSS) and frequency hopping spread spectrum (FHSS), a chirp spread spectrum (CSS) technology has advantages of protection against deep fading, low transmission power, and a low interception probability, and has a high processing gain at the receiving end. In addition, the CSS technology also has excellent performance such as a strong capability of protection against a frequency offset, a long transmission distance, and easy spread spectrum. Two modulation modes based on the CSS technology are binary orthogonal keying (BOK) and direct modulation (DM). In the BOK mode, different data is represented by different chirp pulses (or a combination of a plurality of different pulses). For example, 1 is represented by up-chirp, and 0 is represented by down-chirp. In the DM mode, a signal modulated in another manner (for example, differential phase shift keying (DPSK) or differential quadrature reference phase shift keying (DQPSK)) is multiplied by a chirp signal to achieve a spread-spectrum purpose.
The existing BOK and DM technologies map a chirp symbol formed by a pulse with a rising frequency, a pulse with a falling frequency, or their combination onto a single piece of data, so that time corresponding to each chirp symbol needs to be greater than or equal to a pulse width. Therefore, M-ary data cannot be mapped within one pulse width (or pulse cycle), resulting in low data transmission efficiency.

**SUMMARY**

The present disclosure aims to provide a chirp signal-based modulation method and modulator, to realize modulation and mapping of M-ary data within one pulse width, thereby greatly improving transmission efficiency of communication data.
To achieve the above objective, a first aspect of the present disclosure provides a chirp signal-based modulation method. The modulation method includes: modulating M-ary data, and mapping modulated M-ary data onto M pieces of different phase data or M pieces of different frequency data, where $M = 2^L$, L is a positive integer, and the phase data or the frequency data is discrete phase data or frequency data of a chirp signal with a Doppler frequency shift; and generating and outputting, based on the M pieces of different phase data or the M pieces of different frequency data, M modulated signals corresponding to the M-ary data.
Preferably, any piece of phase data $\overline{\phi_m} = [\phi_{m1}, \phi_{m2}, \ldots \phi_{mn}, \ldots \phi_{mN}]$ in the M pieces of different phase data is generated in the following manner: $\phi_{mn} =$

$$\phi_{mn} = \begin{cases} \phi_{m(n-1)} + \Delta\phi^m, & n = \text{even number} \\ \phi^0_{mn}, & n = \text{odd number} \end{cases} \qquad \phi_{mn} = \begin{cases} \phi_{m(n-1)} + \Delta\phi^m, & n = \text{even number} \\ \phi^0_{mn}, & n = \text{odd number} \end{cases}$$

(1), or

$$\phi_{mn} = \begin{cases} \phi_{m(n-1)} + \Delta\phi^m, & n = \text{odd number} \\ \phi^0_{mn}, & n = \text{even number} \end{cases}$$

(2), where N represents a quantity of time periods divided from a pulse cycle of a chirp signal without the Doppler frequency shift, $\Delta\phi^m$ represents a random value, a value meeting a preset rule, or a fixed value, and $\phi^0_{mn}$ represents a phase, in an $n^{th}$ time period, of an $m^{th}$ chirp signal without the Doppler frequency shift.

Preferably, any piece of frequency data $\overline{f}_m = [f_{m1}, f_{m2}, ... f_{mn}, ... f_{mN}]$ in the M pieces of different frequency data is generated in the following manner: 

$$f_{mn} = \begin{cases} f_{m(n-1)} + \Delta f^m, n = \text{even number} \\ f_{mn}^0, n = odd\ number \end{cases}$$ (3), or

$$f_{mn} = \begin{cases} f_{m(n-1)} + \Delta f^m, n = \text{odd number} \\ f_{mn}^0, n = even\ number \end{cases}$$ (4), where N represents a quantity of time periods divided from a pulse cycle of a chirp signal without the Doppler frequency shift, $\Delta f^m$ represents a random value, a value meeting a preset rule, or a fixed value, and $f_{mn}^0$ represents a frequency, in an n$^{th}$ time period, of an m$^{th}$ chirp signal without the Doppler frequency shift.

Preferably, a relationship between a phase and time of the chirp signal with the Doppler frequency shift is a quadratic polynomial function relationship or a nonlinear function relationship.

Preferably, before the step of modulating M-ary data, and mapping modulated M-ary data onto M pieces of different phase data or M pieces of different frequency data, the modulation method further includes: performing channel coding on the M-ary data; and scrambling the M-ary data on which channel coding is performed.

Preferably, the modulation method further includes: converting the M modulated signals to radio frequency (RF) signals from baseband signals, to transmit the RF signals by a channel.

A second aspect of the present disclosure provides a chirp signal-based modulator. The modulator includes: a modulation and mapping apparatus, configured to modulate M-ary data, and map modulated M-ary data onto M pieces of different phase data or M pieces of different frequency data, where M = 2$^L$, L is a positive integer, and the phase data or the frequency data is discrete phase data or frequency data of a chirp signal with a Doppler frequency shift; and a signal generation apparatus, configured to generate and output, based on the M pieces of different phase data or the M pieces of different frequency data, M modulated signals corresponding to the M-ary data.

Preferably, the modulator further includes: a first data generation apparatus, configured to generate any piece of phase data $\overline{\phi}_m = [\phi_{m1}, \phi_{m2}, ... \phi_{mn}, ... \phi_{mN}]$ in the M pieces of different phase data in the following manner:

$$\phi_{mn} = \begin{cases} \phi_{m(n-1)} + \Delta \phi^m, n = \text{even number} \\ \phi_{mn}^0, n = odd\ number \end{cases}$$ (1), or $$\phi_{mn} = \begin{cases} \phi_{m(n-1)} + \Delta \phi^m, n = \text{odd number} \\ \phi_{mn}^0, n = even\ number \end{cases}$$

(2), where N represents a quantity of time periods divided from a pulse cycle of a chirp signal without the Doppler frequency shift, $\Delta \phi^m$ represents a random value, a value meeting a preset rule, or a fixed value, and $\phi_{mn}^0$ represents a phase, in an n$^{th}$ time period, of an m$^{th}$ chirp signal without the Doppler frequency shift.

Preferably, the modulator further includes: a second data generation apparatus, configured to generate any piece of frequency data $\overline{f}_m = [f_{m1}, f_{m2}, .. f_{mn}, ... f_{mN}]$ in the M pieces of different frequency data in the following manner: $f_{mn}$

$$= \begin{cases} f_{m(n-1)} + \Delta f^m, n = \text{even number} \\ f_{mn}^0, n = odd\ number \end{cases}$$ (3), or $$f_{mn} = \begin{cases} f_{m(n-1)} + \Delta f^m, n = \text{odd number} \\ f_{mn}^0, n = even\ number \end{cases}$$ (4), where N represents a quantity of time periods divided from a pulse cycle of a chirp signal without the Doppler frequency shift, $\Delta f^m$ represents a random value, a value meeting a preset rule, or a fixed value, and $f_{mn}^0$ represents a frequency, in an n$^{th}$ time period, of an m$^{th}$ chirp signal without the Doppler frequency shift.

Preferably, the modulator further includes: a channel coding apparatus, configured to perform channel coding on the M-ary data; and a scrambling apparatus, configured to scramble the M-ary data on which channel coding is performed.

Preferably, the modulator further includes: a signal conversion apparatus, configured to convert the M modulated signals to RF signals from baseband signals, to transmit the RF signals by a channel.

According to the above technical solutions, the present disclosure creatively modulates the M-ary data, maps the modulated M-ary data onto discrete phase data (or frequency data) of M different chirp signals with the Doppler frequency shift, and then generates M different chirp waveforms (namely, M different modulated signals) based on the M pieces of phase data (or frequency data). Therefore, the M-ary data can be modulated and mapped within one pulse width, thereby greatly improving transmission efficiency of communication data.

A third aspect of the present disclosure provides a machine-readable storage medium, where the machine-readable storage medium stores an instruction, and the instruction is used to enable a machine to execute the chirp signal-based modulation method.

Other features and advantages of the present disclosure are described in detail in the following DETAILED DESCRIPTION part.

## BRIEF DESCRIPTION OF THE DRAWINGS

The accompanying drawings are provided for further understanding of the present disclosure, and constitute a part of the specification. The accompanying drawings and the following specific implementations are intended to explain embodiments of the present disclosure, rather than to limit the embodiments of the present disclosure. In the drawings:

FIG. 1 is a flowchart of a chirp signal-based modulation method according to an embodiment of the present disclosure;

FIG. 2A is an example of frequency data (or vector) according to an embodiment of the present disclosure;

FIG. 2B is an example of phase data (or vector) according to an embodiment of the present disclosure;

FIG. 3A is an example of two frequency vectors ($\overline{f}_1$ and $\overline{f}_3$) corresponding to quanternary data according to an embodiment of the present disclosure;

FIG. 3B is an example of two frequency vectors ($\overline{f}_2$ and $\overline{f}_4$) corresponding to quanternary data according to an embodiment of the present disclosure;

FIG. 4A shows a chirp signal-based modulation process according to an embodiment of the present disclosure;

FIG. 4B shows a chirp signal-based modulation process according to another embodiment of the present disclosure;

FIG. 5 shows a chirp signal-based communication process according to an embodiment of the present disclosure; and

FIG. 6 is a structural diagram of a chirp signal-based modulator according to an embodiment of the present disclosure.

## DETAILED DESCRIPTION

Specific implementations of the present disclosure are described in detail below with reference to the accompanying drawings. It should be understood that the specific implementations described herein are only intended to illustrate and interpret the present disclosure, rather than to limit the present disclosure.

A formula of a chirp signal is as follows:

$$s(t) = rect(\frac{t}{T})e^{j\varphi(t)} \quad (5)$$

In the above formula, j represents a complex unit symbol, $\varphi(t)$ represents a phase of the chirp signal, and $rect(\frac{t}{T})$ represents a rectangular pulse signal whose amplitude is 1 and pulse width (or cycle) is T. A specific formula of the rectangular pulse signal is expressed as follows:

$$rect(\frac{t}{T}) = \begin{cases} 1, & [-T/2, \ T/2] \\ 0, & others \end{cases} \quad (6)$$

A phase of a chirp signal without a Doppler frequency shift may be as follows:

$$\varphi(t) = \pi \frac{B}{T} t^2 = \pi K t^2 \quad (7)$$

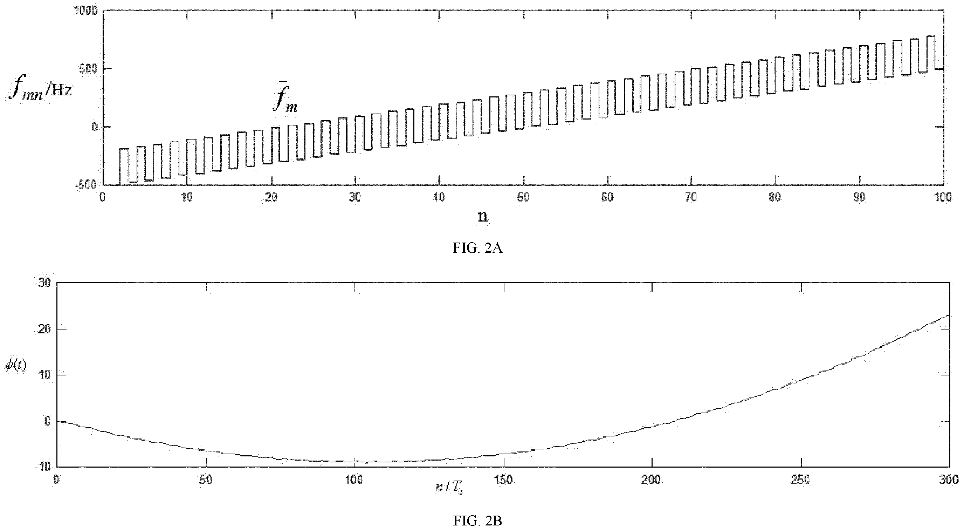

Therefore, for the chirp signal without the Doppler frequency shift, its phase is symmetrical with respect to t = 0, and its frequency (namely, a derivative of the phase to time) changes linearly with the time. A chirp signal with the Doppler frequency shift (ID-chirp signal) in each embodiment of the present disclosure is discrete frequency data (or vector, also referred to as ID-chirp symbol) shown in FIG. 2A and obtained by implanting the Doppler frequency shift into the chirp signal without the Doppler frequency shift (namely, the original chirp signal). M-ary data can be modulated and mapped within one pulse cycle based on a plurality of chirp signals with the Doppler frequency shift.

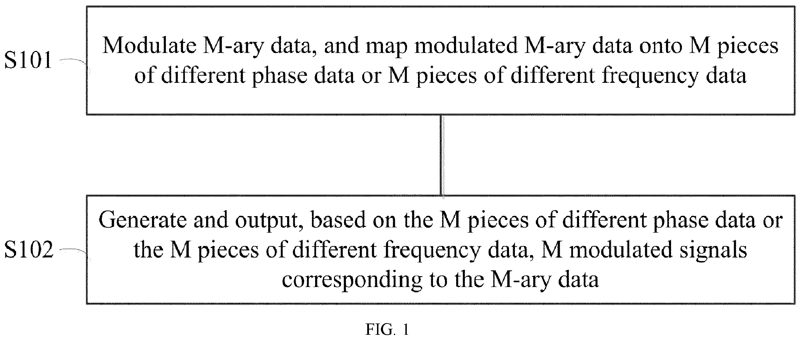

FIG. 1 is a flowchart of a chirp signal-based modulation method according to an embodiment of the present disclosure. As shown in FIG. 1, the modulation method may include steps S101 and S102.

In an embodiment, before step S101, the modulation method may further include: generating any piece of phase data $\overline{\phi}_m = [\phi_{m1}, \ \phi_{m2}, .. \phi_{mn}, ... \phi_{mN}]$ in M pieces of different phase data according to a formula (1) or (2), where $M=2^L$,

L is a positive integer:

$$\phi_{mn} = \begin{cases} \phi_{m(n-1)} + \Delta\phi^m, n = \text{even number} \\ \phi_{mn}^0, n = \text{odd number} \end{cases} \quad (1)$$

$$\phi_{mn} = \begin{cases} \phi_{m(n-1)} + \Delta\phi^m, n = \text{odd number} \\ \phi_{mn}^0, n = even\ number \end{cases} \quad (2)$$

where N represents a quantity of time periods divided from a pulse cycle of a chirp signal without a Doppler frequency shift, $\Delta\phi^m$ represents a random value, a value meeting a preset rule, or a fixed value, and $\phi_{mn}^0$ represents a phase, in an $n^{th}$ time period, of an $m^{th}$ chirp signal without the Doppler frequency shift. Because $\Delta\phi^m$ may be the random value or the value meeting the preset rule, a relationship between a phase and time of a chirp signal with the Doppler frequency shift is a quadratic polynomial function relationship or a nonlinear function relationship (the nonlinear function relationship can be used to expand a frequency data type, so that more frequency data types can be used to represent signals with base-larger number numeral system, and for example, the nonlinear function relationship is a hyperbola). For example, FIG. 2B shows a specific form of $\overline{\phi_m}$ that is not symmetrical any longer with respect to t=0.

In another embodiment, before step S101, the modulation method may further include: generating any piece of frequency data $\overline{f}_m = [f_{m1}, f_{m2},...f_{mn},...f_{mN}]$ in M pieces of different frequency data according to a formula (3) or (4):

$$f_{mn} = \begin{cases} f_{m(n-1)} + \Delta f^m, n = \text{even number} \\ f_{mn}^0, n = odd\ number \end{cases} \quad (3)$$

$$f_{mn} = \begin{cases} f_{m(n-1)} + \Delta f^m, n = \text{odd number} \\ f_{mn}^0, n = even\ number \end{cases} \quad (4)$$

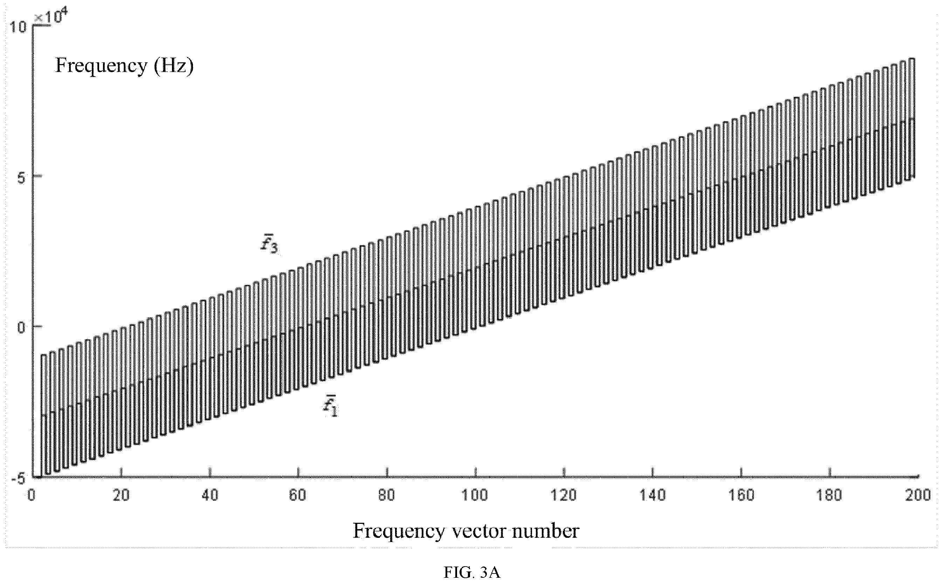

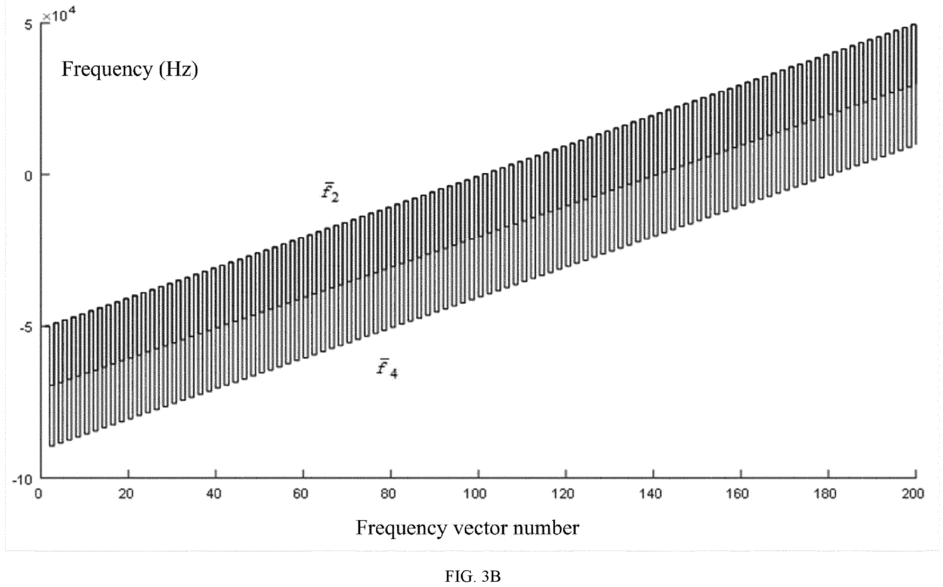

where N represents a quantity of time periods divided from a pulse cycle of a chirp signal without a Doppler frequency shift, $\Delta f^m$ represents a random value, a value meeting a preset rule, or a fixed value, and $f_{mn}^0$ represents a frequency, in an $n^{th}$ (namely, frequency vector number) time period, of an $m^{th}$ chirp signal without the Doppler frequency shift. For example, FIG. 2A shows a specific form of $\overline{f}_m$, where $\Delta f^m$ is a fixed value, and therefore $\overline{f}_m$ is a regular frequency vector. Different $\Delta f^m$ may be selected for the M pieces of different frequency data $\{\overline{f}_1, \overline{f}_2,... \overline{f}_m, ... \overline{f}_M\}$, as shown in FIG. 3A and FIG. 3B.

To restrict a spectrum width for outputting a chirp waveform, $f_{mn} \in [-B/2, +B/2]$ may be set.

The above M pieces of different phase data (or frequency data) are referred to as M different chirp symbols. Therefore, the above process may be referred to as a process of generating the M different chirp symbols. Next, a process of modulating M-ary data, mapping modulated M-ary data onto the M chirp symbols, and outputting M chirp waveforms based on the M chirp symbols is executed by performing steps S101 and S102.

Step S101: Modulate the M-ary data, and map the modulated M-ary data onto the M pieces of different phase data or the M pieces of different frequency data, where

M = $2^L$, L is a positive integer (L = 1, 2, 3, or the like), and the phase data or the frequency data is discrete phase data or frequency data of the chirp signal with the Doppler frequency shift.

For example, for a quaternary modulation system, related parameters are set as follows: signal bandwidth B = 100 kHz; pulse cycle T = 1.5 ms; sampling time Ts = 1/(2*B) = 1e$^{-5}$ s; M = 4; and N = 100.

Table 1 Mapping relationships between a quaternary code element and four chirp symbols

| Code element | Frequency vector | Time-domain offset of a compressed pulse |
|---|---|---|
| 00 | $\overline{f}_1$ | $\tau_1$ |
| 01 | $\overline{f}_2$ | $\tau_2$ |
| 10 | $\overline{f}_3$ | $\tau_3$ |
| 11 | $f_4$ | $\tau_4$ |

Specifically, the modulation and mapping process in step S101 can be executed based on the mapping relationships in Table 1. Certainly, in another embodiment of the present disclosure, the modulation and mapping process may alternatively be executed based on a mapping relationship between "00 01 10 11" and "$\overline{f}_1$, $\overline{f}_2$, $\overline{f}_4$, $\overline{f}_3$" or another mapping relationship.

Step S102: Generate and output, based on the M pieces of different phase data or the M pieces of different frequency data, M modulated signals corresponding to the M-ary data.

The M different modulated signals (namely, chirp waveforms) can be generated based on the M pieces of different phase data (or frequency data) obtained in step S101 and the above formula (1), and the generated M modulated signals one-to-one correspond to the M-ary data.

After the step of outputting the M modulated signals corresponding to the M-ary data, the modulation method may further include: converting the M modulated signals to RF signals from baseband signals, to transmit the RF signals by a channel.

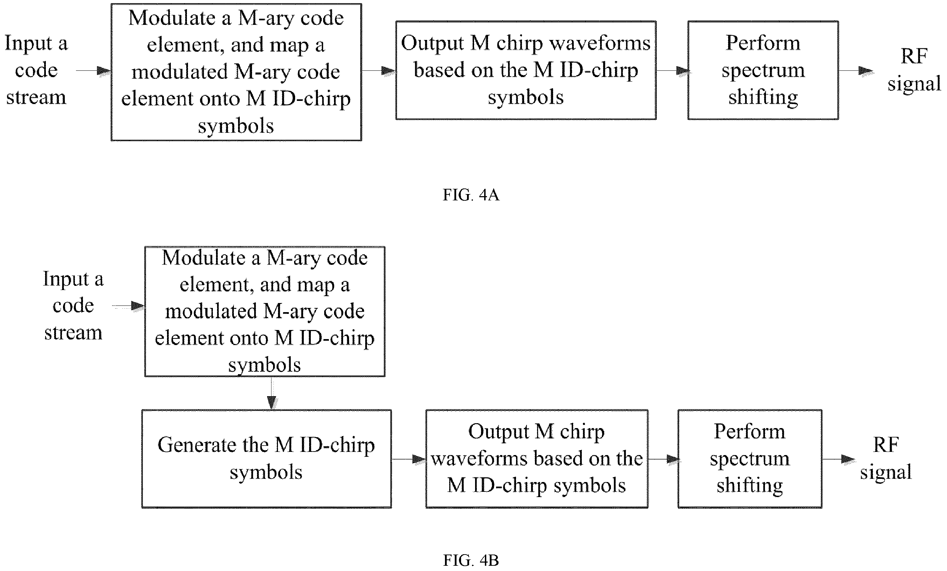

As shown in FIG. 4A, a chirp signal-based modulation process may mainly include: inputting a code stream; modulating a M-ary code element, and mapping a modulated M-ary code element onto M ID-chirp symbols (the M ID-chirp symbols have been generated in advance); outputting M chirp waveforms based on the M ID-chirp symbols; and performing spectrum shifting to form an RF signal. Alternatively, as shown in FIG. 4B, a chirp signal-based modulation process may mainly include: inputting a code stream; modulating a M-ary code element, and mapping a modulated M-ary code element onto M ID-chirp symbols; generating the M ID-chirp symbols; outputting M chirp waveforms based on the M ID-chirp symbols; and performing spectrum shifting to form an RF signal. The above content describes a chirp signal modulation process (referred to as chirp modulation for short).

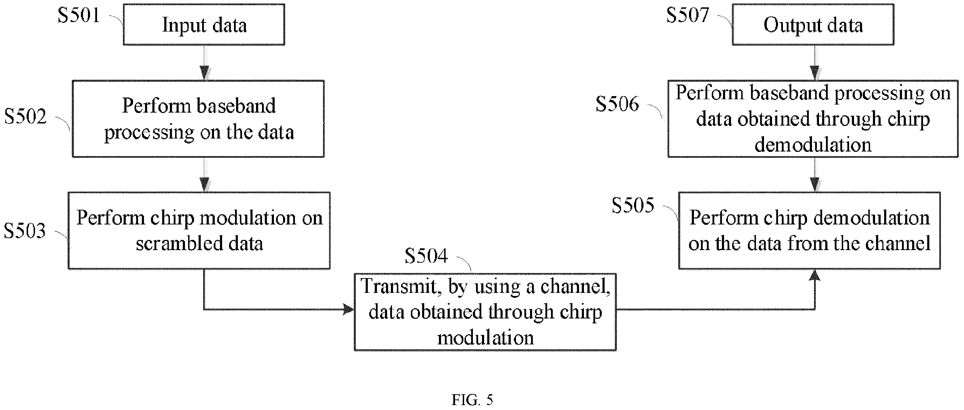

In an embodiment of the present disclosure, channel coding can be further performed on data to improve reliability of data transmission by increasing redundancy. In addition, when the data is transmitted repeatedly, energy is concentrated on a certain frequency, resulting in EMI noise. Therefore, in this embodiment of the present disclosure, a scrambling code is added to the data to disperse the concentrated energy and change the possible EMI noise into white noise. Specifically, the modulation method may further include: performing channel coding on the M-ary data; and scrambling the M-ary data on which channel coding is performed, as shown in FIG. 5.

Specifically, FIG. 5 is used as an example to describe a chirp signal-based communication process. The communication process may include steps S501 to S507.

Step S501: Input data.

Step S502: Perform baseband processing on the data.

Specifically, the performing baseband processing on the data includes: performing channel coding and scrambling.

Step S503: Perform chirp modulation on scrambled data.

Step S504: Transmit, by a channel, data obtained through chirp modulation.

Step S505: Perform chirp demodulation on the data from the channel.

Chirp demodulation is performed based on the time-domain offset of the compressed pulse. Specifically, the data is matched and filtered to obtain the time-domain offset of the compressed pulse, and a de-mapping process is realized based on the mapping relationship between the code element and the time-domain offset of the compressed pulse in Table 1.

Step S506: Perform baseband processing on data obtained through chirp demodulation.

Specifically, the performing baseband processing on data obtained through chirp demodulation includes performing channel decoding and descrambling on the data.

Step S507: Output data.

In conclusion, the present disclosure creatively modulates the M-ary data, maps the modulated M-ary data onto discrete phase data (or frequency data) of M different chirp signals with the Doppler frequency shift, and then generates the M different chirp waveforms (namely, the M different modulated signals) based on the M pieces of phase data (or frequency data). Therefore, the M-ary data can be modulated and mapped within one pulse width, thereby greatly improving transmission efficiency of communication data.

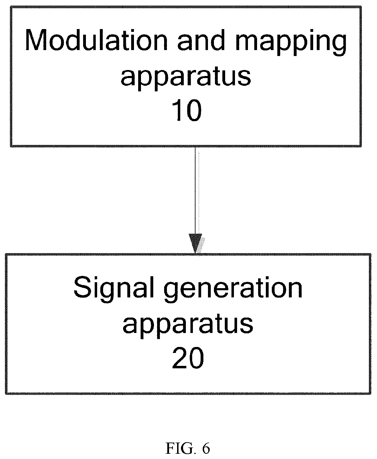

FIG. 6 is a structural diagram of a chirp signal-based modulator according to an embodiment of the present disclosure. As shown in FIG. 6, the modulator may include: a modulation and mapping apparatus 10, configured to modulate M-ary data, and map modulated M-ary data onto M pieces of different phase data or M pieces of different frequency data, where M = 2L, L is a positive integer, and the phase data or the frequency data is discrete phase data or frequency data of a chirp signal with a Doppler frequency shift; and a signal generation apparatus 20, configured to generate and output, based on the M pieces of different phase data or the M pieces of different frequency data, M modulated signals corresponding to the M-ary data.

Preferably, the modulator further includes: a data generation apparatus, configured to generate any piece of phase data $\overline{\phi}_m = [\phi_{m1}, \phi_{m2},...\phi_{mn},...\phi_{mN}]$ in the M pieces of different phase data in the following manner:

$$\phi_{mn} = \begin{cases} \phi_{m(n-1)} + \Delta\phi^m, n = \text{even number} \\ \phi_{mn}^0, n = odd\ number \end{cases} \quad (1), \text{ or} \qquad \phi_{mn} = \begin{cases} \phi_{m(n-1)} + \Delta\phi^m, n = \text{odd number} \\ \phi_{mn}^0, n = even\ number \end{cases}$$

(2), where N represents a quantity of time periods divided from a pulse cycle of a chirp signal without the Doppler frequency shift, $\Delta\phi^m$ represents a random value, a value meeting a preset rule, or a fixed value, and $\phi_{mn}^0$ represents a phase, in an $n^{th}$ time period, of an $m^{th}$ chirp signal without the Doppler frequency shift; or configured to generate any piece of frequency data $\overline{f}_m = [f_{m1}, f_{m2},...f_{mn},...f_{mN}]$ in the M pieces of different frequency data in the following manner:

$$f_{mn} = \begin{cases} f_{m(n-1)} + \Delta f^m, n = \text{even number} \\ f_{mn}^0, n = odd\ number \end{cases} \quad (3), \text{ or} \qquad f_{mn} = \begin{cases} f_{m(n-1)} + \Delta f^m, n = \text{odd number} \\ f_{mn}^0, n = even\ number \end{cases}$$

(4),

where N represents a quantity of time periods divided from a pulse cycle of a chirp signal without the Doppler frequency shift, $\Delta f^m$ represents a random value, a value meeting a preset rule, or a fixed value, and $f_{mn}^0$ represents a frequency, in an $n^{th}$ time period, of an $m^{th}$ chirp signal without the Doppler frequency shift.

Preferably, the modulator further includes: a channel coding apparatus, configured to perform channel coding on the M-ary data; and a scrambling apparatus, configured to scramble the M-ary data on which channel coding is performed.

Preferably, the modulator further includes: a signal conversion apparatus, configured to convert the M modulated signals to RF signals from baseband signals, to transmit the RF signals by a channel.

In this embodiment of the present disclosure, the modulation and mapping apparatus 10, the signal generation apparatus 20, the data generation apparatus, the channel coding apparatus, the scrambling apparatus, and the signal conversion apparatus each may be one or more processors, controllers or chips that each have a communication interface, can realize a communication protocol, and may further include a memory, a related interface and system transmission bus, and the like if necessary. The processor, controller or chip executes program-related code to realize a corresponding function. Alternatively, the modulation and mapping apparatus 10, the signal generation apparatus 20, the data generation apparatus, the channel coding apparatus, the scrambling apparatus, and the signal conversion apparatus share one integrated chip or share a processor, a controller, a memory, and other devices. The shared processor, controller or chip executes program-related code to realize a corresponding function.

For specific details and benefits of the chirp signal-based modulator provided in the present disclosure, refer to the above description of the chirp signal-based modulation method. Details are not described herein again.

An embodiment of the present disclosure provides a machine-readable storage medium, where the machine-readable storage medium stores an instruction, and the instruction is used to enable a machine to execute the chirp signal-based modulation method.

The machine-readable storage medium includes but is not limited to any medium that can store program code, such as a phase change random access memory (PRAM, also referred to as RCM/PCRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD) or another optical memory, a cassette tape, and a tape memory, a disk memory or another magnetic storage device.

Preferred implementations of the present disclosure are described above in detail with reference to the accompanying drawings, but the present disclosure is not limited to specific details in the above implementations. A plurality of simple variations can be made to the technical solutions of the present disclosure without departing from the technical ideas of the present disclosure, and these simple variations fall within the protection scope of the present disclosure.

In addition, it should be noted that the specific technical features described in the above specific implementations can be combined in any suitable way without any contradiction. To avoid unnecessary repetition, various possible combination modes of the present disclosure are not described separately.

In addition, different implementations of the present disclosure can also be combined arbitrarily. The combinations should also be regarded as content disclosed in the present disclosure, provided that they do not violate the ideas of the present disclosure.

**Claims**

1. A chirp signal-based modulation method, wherein the modulation method comprises:

modulating M-ary data, and mapping modulated M-ary data onto M pieces of different phase data or M pieces of different frequency data, wherein M = $2^L$, L is a positive integer, and the phase data or the frequency data is discrete phase data or frequency data of a chirp signal with a Doppler frequency shift; and

generating and outputting, based on the M pieces of different phase data or the M pieces of different frequency data, M modulated signals corresponding to the M-ary data.

2. The chirp signal-based modulation method according to claim 1, wherein
any piece of phase data $\overline{\phi_m}$ = [$\phi_{m1}$, $\phi_{m2}$,...$\phi_{mn}$,...$\phi_{mN}$] in the M pieces of different phase data is generated in the following manner:

$$\phi_{mn} = \begin{cases} \phi_{m(n-1)} + \Delta\phi^m, n = \text{even number} \\ \phi_{mn}^0, n = odd\ number \end{cases} \quad (1),$$

or

$$\phi_{mn} = \begin{cases} \phi_{m(n-1)} + \Delta\phi^m, n = \text{odd number} \\ \phi_{mn}^0, n = even\ number \end{cases} \quad (2)$$

wherein N represents a quantity of time periods divided from a pulse cycle of a chirp signal without the Doppler frequency shift, $\Delta\phi^m$ represents a random value, a value meeting a preset rule, or a fixed value, and $\phi_{mn}^0$ represents a phase, in an $n^{th}$ time period, of an $m^{th}$ chirp signal without the Doppler frequency shift.

3. The chirp signal-based modulation method according to claim 1, wherein
any piece of frequency data $\overline{f_m}$ = [$f_{m1}$, $f_{m2}$,...$f_{mn}$,...$f_{mN}$] in the M pieces of different frequency data is generated in the following manner:

$$f_{mn} = \begin{cases} f_{m(n-1)} + \Delta f^m, n = even\ number \\ f_{mn}^0, n = odd\ number \end{cases} \quad (3),$$

or

$$f_{mn} = \begin{cases} f_{m(n-1)} + \Delta f^m, n = \text{odd number} \\ f_{mn}^0, n = even\ number \end{cases} \quad (4)$$

wherein N represents a quantity of time periods divided from a pulse cycle of a chirp signal without the Doppler frequency shift, $\Delta f^m$ represents a random value, a value meeting a preset rule, or a fixed value, and $f_{mn}^0$ represents a frequency, in an $n^{th}$ time period, of an $m^{th}$ chirp signal without the Doppler frequency shift.

4. The chirp signal-based modulation method according to claim 2, wherein a relationship between a phase and time of the chirp signal with the Doppler frequency shift is a quadratic polynomial function relationship or a nonlinear function relationship.

5. The chirp signal-based modulation method according to claim 2 or 3, wherein before the step of modulating M-ary data, and mapping modulated M-ary data onto M pieces of different phase data or M pieces of different frequency data, the modulation method further comprises:

performing channel coding on the M-ary data; and
scrambling the M-ary data on which channel coding is performed.

6. The chirp signal-based modulation method according to claim 2 or 3, wherein the modulation method further comprises:

converting the M modulated signals to radio frequency, RF, signals from baseband signals, to transmit the RF signals by a channel.

7. A chirp signal-based modulator, wherein the modulator comprises:

a modulation and mapping apparatus, configured to modulate M-ary data, and map modulated M-ary data onto M pieces of different phase data or M pieces of different frequency data, wherein $M = 2^L$, L is a positive integer, and the phase data or the frequency data is discrete phase data or frequency data of a chirp signal with a Doppler frequency shift; and

a signal generation apparatus, configured to generate and output, based on the M pieces of different phase data or the M pieces of different frequency data, M modulated signals corresponding to the M-ary data.

8. The chirp signal-based modulator according to claim 7, wherein the modulator further comprises:
a first data generation apparatus, configured to generate any piece of phase data $\overline{\phi_m} = [\phi_{m1}, \phi_{m2}, \dots \phi_{mn}, \dots \phi_{mN}]$ in the M pieces of different phase data in the following manner:

$$\phi_{mn} = \begin{cases} \phi_{m(n-1)} + \Delta\phi^m, n = \text{even number} \\ \phi_{mn}^0, n = odd\ number \end{cases} \quad (1),$$

or

$$\phi_{mn} = \begin{cases} \phi_{m(n-1)} + \Delta\phi^m, n = \text{odd number} \\ \phi_{mn}^0, n = even\ number \end{cases} \quad (2)$$

wherein N represents a quantity of time periods divided from a pulse cycle of a chirp signal without the Doppler frequency shift, $\Delta\phi^m$ represents a random value, a value meeting a preset rule, or a fixed value, and $\phi_{mn}^0$ represents a phase, in an $n^{th}$ time period, of an $m^{th}$ chirp signal without the Doppler frequency shift.

9. The chirp signal-based modulator according to claim 7, wherein the modulator further comprises:
a second data generation apparatus, configured to generate any piece of frequency data $\overline{f_m} = [f_{m1}, f_{m2}, \dots f_{mn}, \dots f_{mN}]$ in the M pieces of different frequency data in the following manner:

$$f_{mn} = \begin{cases} f_{m(n-1)} + \Delta f^m, n = \text{even number} \\ f_{mn}^0, n = odd\ number \end{cases} \quad (3),$$

or

$$f_{mn} = \begin{cases} f_{m(n-1)} + \Delta f^m, n = \text{odd number} \\ f_{mn}^0, n = even\ number \end{cases} \quad (4)$$

wherein N represents a quantity of time periods divided from a pulse cycle of a chirp signal without the Doppler frequency shift, $\Delta f^m$ represents a random value, a value meeting a preset rule, or a fixed value, and $f_{mn}^0$ represents a frequency, in an $n^{th}$ time period, of an $m^{th}$ chirp signal without the Doppler frequency shift.

10. The chirp signal-based modulator according to claim 8 or 9, wherein the modulator further comprises:

a channel coding apparatus, configured to perform channel coding on the M-ary data; and
a scrambling apparatus, configured to scramble the M-ary data on which channel coding is performed.

11. The chirp signal-based modulator according to claim 8 or 9, wherein the modulator further comprises:
a signal conversion apparatus, configured to convert the M modulated signals to RF signals from baseband signals, to transmit the RF signals by a channel.

12. A machine-readable storage medium, wherein the machine-readable storage medium stores an instruction, and the instruction is used to enable a machine to execute the chirp signal-based modulation method according to any one of claims 1 to 6.

S101 — Modulate M-ary data, and map modulated M-ary data onto M pieces of different phase data or M pieces of different frequency data

S102 — Generate and output, based on the M pieces of different phase data or the M pieces of different frequency data, M modulated signals corresponding to the M-ary data

FIG. 1

FIG. 2A

FIG. 2B

FIG. 3A

FIG. 3B

Input a code stream → Modulate a M-ary code element, and map a modulated M-ary code element onto M ID-chirp symbols → Output M chirp waveforms based on the M ID-chirp symbols → Perform spectrum shifting → RF signal

FIG. 4A

Input a code stream → Modulate a M-ary code element, and map a modulated M-ary code element onto M ID-chirp symbols → Generate the M ID-chirp symbols → Output M chirp waveforms based on the M ID-chirp symbols → Perform spectrum shifting → RF signal

FIG. 4B

S501 — Input data

S507 — Output data

S502 — Perform baseband processing on the data

S506 — Perform baseband processing on data obtained through chirp demodulation

S503 — Perform chirp modulation on scrambled data

S505 — Perform chirp demodulation on the data from the channel

S504 — Transmit, by using a channel, data obtained through chirp modulation

FIG. 5

Modulation and mapping apparatus 10

Signal generation apparatus 20

FIG. 6

## INTERNATIONAL SEARCH REPORT

| International application No. |
| --- |
| **PCT/CN2021/113896** |

**A.  CLASSIFICATION OF SUBJECT MATTER**

H04L 27/26(2006.01)i

According to International Patent Classification (IPC) or to both national classification and IPC

**B.  FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; EPTXT; USTXT; WOTXT; IEEE: 调制, 线性调频信号, 相位, 频率, 多普勒频移, 编码, 映射, 进制, 脉冲, 调制信号, modulat+, Chirp+, LFM, phase?, frequenc+, doppler+ w shift+, cod+, map+, binary+, plus++, signal+

**C.  DOCUMENTS CONSIDERED TO BE RELEVANT**

| Category* | Citation of document, with indication, where appropriate, of the relevant passages | Relevant to claim No. |
| --- | --- | --- |
| PX | CN 112134821 A (BEIJING SMARTCHIP MICROELECTRONICS TECHNOLOGY COMPANY LIMITED et al.) 25 December 2020 (2020-12-25) <br> claims 1-10, description paragraphs [0036]-[0076] | 1-12 |
| PX | CN 112134820 A (BEIJING SMARTCHIP MICROELECTRONICS TECHNOLOGY COMPANY LIMITED et al.) 25 December 2020 (2020-12-25) <br> claims 1-15, description paragraphs [0062]-[0141] | 1-12 |
| Y | CN 110581750 A (SHANGHAI PANCHIP MICROELECTRONICS CO., LTD.) 17 December 2019 (2019-12-17) <br> description, paragraphs [0022]-[0031] | 1-12 |
| Y | US 6518917 B1 (RAYTHEON CORP) 11 February 2003 (2003-02-11) <br> description, column 4, lines 45-67 | 1-12 |
| A | CN 102185636 A (HANGZHOU HUAYUNTIANLUE ELECTRONIC TECHNOLOGY CO., LTD.) 14 September 2011 (2011-09-14) <br> entire document | 1-12 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 October 2021** | **01 November 2021** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/113896**

| Patent document cited in search report | | | Publication date (day/month/year) | Patent family member(s) | | | Publication date (day/month/year) |
|---|---|---|---|---|---|---|---|
| CN | 112134821 | A | 25 December 2020 | None | | | |
| CN | 112134820 | A | 25 December 2020 | None | | | |
| CN | 110581750 | A | 17 December 2019 | WO | 2021093492 | A1 | 20 May 2021 |
| | | | | CN | 110581750 | B | 27 March 2020 |
| US | 6518917 | B1 | 11 February 2003 | EP | 1153318 | A1 | 14 November 2001 |
| | | | | WO | 0049426 | A1 | 24 August 2000 |
| | | | | AU | 3491400 | A | 04 September 2000 |
| | | | | EP | 1577681 | A1 | 21 September 2005 |
| CN | 102185636 | A | 14 September 2011 | None | | | |

Form PCT/ISA/210 (patent family annex) (January 2015)